# EUROPÄISCHE PATENTANMELDUNG

(11) **EP 0 521 300 A2**
(43) Veröffentlichungstag der Anmeldung: **07.01.1993**
(21) Anmeldenummer: 92109020.5
(22) Anmeldetag: 29.05.1992
(51) Int. Cl.: G01N 21/78, G01N 31/22

(54) **Kolorimetrisches Prüf- und Messgerät für Gase**

(30) Priorität: 29.06.1991 DE 4121633
(71) Anmelder: Drägerwerk Aktiengesellschaft, D-23542 Lübeck (DE)
(72) Erfinder: Evers, Wolfgang, W-2400 Lübeck 1 (DE)

(57) **Zusammenfassung**

Ein Meßgerät zum kolorimetrischen Nachweis von Gasen auf einem Träger (2), der mit einer Lösung aus einem Feuchtespeicher und einem Nachweis-Indikator imprägniert ist, soll derart verbessert werden, daß die für die Nachweisreaktion benötigte Feuchtigkeit auf dem Indikatorträger über einen längeren Zeitraum sowohl während der Lagerung in unbenutztem Zustand als auch während der Messung unter Einwirkung des nachzuweisenden gasförmigen Stoffes erhalten bleibt. Zu diesem Zweck wird die Imprägnierlösung zusammengesetzt aus dem Nachweis-Indikator und einem Gemisch aus Sulfolan und Diethylphthalat als Feuchtespeicher. Zur Messung von Hydridgasen besteht der Indikator aus einem Palladiumtetraminchlorid. Die Imprägnierlösung wird auf einen Papierträger oder auf einen körnigen Silikagelträger aufgetragen.

## Beschreibung

Die Erfindung betrifft ein Prüf- und Meßgerät zum kolorimetrischen Nachweis von gasförmigen Stoffen, welches einen Träger für einen Nachweisindikator besitzt, der zusammen mit einem als Feuchtespeicher dienenden Zusatz auf dem Träger imprägniert ist.

Ein derartiges Prüf- und Meßgerät ist aus der DE-A-40 20 753 bekanntgeworden.

Das bekannte Meßgerät dient dem sicheren Aufspüren von beispielsweise Hydridgasen, wie Arsin oder Phosphin, als hochgiftige Bestandteile bei der Verarbeitung z.B. in der Halbleiterindustrie. Dazu bedarf es eines einfach handzuhabenden und zuverlässig anzeigenden Gerätes- Für viele Indikatormaterialien wie z.B. dem bei dem bekannten Dosimeter verwendeten Palladiumsalz zum Nachweis von Hydridgasen ist es notwendig, daß der Indikator sowohl während der Lagerung in unbenutztem Zustand als auch bei länger andauernden Meßzeiten ein gewisser Feuchtigkeitsgrad bereitgestellt wird, damit einerseits während der Lagerung eine Austrocknung vermieden und andererseits während des Meßvorgangs genügend für die Verfärbungsreaktion notwendige Feuchtigkeit zur Verfügung steht. Als gängige Feuchtigkeitsspeicher werden Glykole, insbesondere Ethylenglykol, verwendet. Da jedoch in zunehmenden Maße allgemein immer längere Meßzeiträume für eine kontinuierliche Luftüberwachung erforderlich sind, hat sich ein Glykol als Feuchtespeicher als nicht ausreichend erwiesen- Langzeitmessungen nehmen typischerweise einen Zeitraum von 8, 12 und auch 24 Stunden in Anspruch. Es besteht daher generell ein Bedarf an Feuchtespeichern in der Imprägnierlösung von kolorimetrischen Prüf- und Meßgeräten, die diesen verlängerten Meßzeiträumen Rechnung tragen.

Der vorliegenden Erfindung liegt somit die Aufgabe zugrunde, ein Prüf- und Meßgerät der genannten Art so zu verbessern, daß die für die Nachweisreaktion benötigte Feuchtigkeit auf dem Indikatorträger über einen längeren Zeitraum sowohl während der Lagerung im unbenutzten Zustand als auch während der Messung unter Einwirkung des nachzuweisenden gasförmigen Stoffes erhalten bleibt.

Die Lösung der Aufgabe erfolgt dadurch, daß als Feuchtespeicher ein Gemisch aus Sulfolan und Diethylphtalat vorgesehen ist.

Der Vorteil der Erfindung liegt im wesentlichen darin, daß eine deutlich verlängerte Speicherwirkung für die zum Nachweis notwendige Feuchtigkeit erzielt wird, wodurch eine Austrocknung des Indikators über eine längere kontinuierliche Meßzeit verhindert wird, auch wenn der Indikator einem relativ trockenen Meßgas ausgesetzt ist. Ein derartiger Feuchtespeicher ist nicht nur für Indikatoren zum Nachweis von Hydridgasen geeignet, sondern kann überall dort verwendet werden, wo der Nachweis-Indikator zur Bildung einer Farbreaktion mit dem nachzuweisenden gasförmigen Stoff einen gewissen Feuchtigkeitsgrad aufweisen muß.

Sulfolan ist als geläufiger Trivialname für Tetrahydrothiophen-1.1-Dioxid bekannt. Diethylphthalat ist eine andere Bezeichnung für die Substanz Phthalsäurediethylester.

Ein besonders geeignetes Mischungsverhältnis zwischen Sulfolan und Diethylphthalat liegt bei 10 Anteilen Sulfolan auf einen Anteil Diethylphthalat. Eine derartige Mischung weist einen Schmelzpunkt von 0 °C auf, wodurch der Einsatz eines solchen mit der Imprägnierlösung versehenen Nachweis-Indikators in einem Temperaturbereich von 2 °C bis 40 °C ermöglicht wird. Durch den wegen des niedrigen Schmelzpunktes kleineren Dampfdrucks trocknet ein Nachweis-Indikator mit einer derartigen Imprägnierlösung selbst bei länger als einer achtstündigen Dauermessung nicht aus.

Zur Messung von Hydridgasen ist es zweckmäßig, den Feuchtespeicher mit einem Palladium-II-Chlorid als Indikator zu einer Imprägnierlösung zu verarbeiten. Diese Imprägnierlösung hat den Vorteil, daß sie über den genannten längeren Zeitraum farblos und unter Einfluß von Hydridgasen zu einer deutlich sichtbar werdenden Verfärbung führt.

Zur Messung von Hydridgasen ist als Indikator ebenso Palladiumtetraminchlorid geeignet. Beide Imprägnierlösungen für den Nachweis von Hydridgasen besitzen dank der Langzeigspeicherwirkung des Sulfolan/Diethylphthalat-Gemisches eine gute Lagerfähigkeit und zeigen eine hervorragende Nachweisempfindlichkeit, da der im unbeladenen Zustand farblose Indikator zu einer deutlichen Verfärbung unter Anwesenheit eines Hydridgases führt.

Zum Nachweis von beispielsweise Phosphorwasserstoff wird die geeignete Imprägnierlösung wie folgt hergestellt: 5 g von pulverisiertem Palladium-II-Chlorid werden in einem Meßkolben eingewogen und in 50 ml Ammoniak bei etwa 100 °C gelöst. Nachdem der Ammoniaküberschuß ausgetrieben ist und sich die Lösung auf Raumtemperatur abgekühlt hat, werden 100 mL Wasser und 100 mL Methanol zugegeben. Daraufhin werden etwa 250 g eines Sulfolan/Diethylphtalat-Gemisches zugewogen und je nach Erfordernis mit Methanol aufgefüllt. Die so hergestellte Imprägnierlösung wird auf den Indikatorträger imprägniert. Der Träger kann eine Papierplakette sein oder auch ein poröser, körniger Silikagelträger. Die imprägnierte Papierplakette wird beispielsweise in ein Gehäuse eingespannt und als Dosimeter benutzt, in dem das nachzuweisende Gas der Plakettenoberfläche ausgesetzt und die daraus resultierende Verfärbung als Maß für die Menge des nachzuweisenden Stoffes herangezogen wird. Der körnige Silikagelträger seinerseits wird z.B. in Prüfröhrchen eingefüllt und dient zur kolorimetrischen Konzentrationsbestimmung von gasförmigen Schadstoffen.

Das angeführte Beispiel beschreibt als fertigen Nachweis-Indikator ein Gemisch in Lösung aus Palladiumtetraminchlorid, Sulfolan und Diethylphtalat, wobei das Palladium Tetraminchlorid aus Palladium-II-Chlorid, versetzt mit Ammoniak, gewonnen wurde. Soll hingegen Palladium-II-Chlorid als Farbindikator dienen, ist die Zubereitung ähnlich vorzunehmen, ohne jedoch Palladium-II-Chlorid mit Ammoniak zu versetzen.

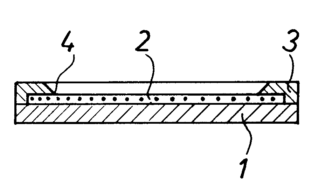

Ein Ausführungsbeispiel der Erfindung wird im folgenden schematisch dargestellt und näher erläutert:
In der einzigen Figur ist ein Dosimeter als Prüfgerät für Gase im Schnitt dargestellt, welches als Prüfplakette mit einem Plakettenträger (1) von kreisförmigem Querschnitt gebildet ist, auf den ein scheibenförmiges, imprägniertes Indikatorpapier (2) gelegt und mit einem Klemmrand (3) auf dem Plakettenträger (1) gehalten ist. Der ringförmige Klemmrand (3) läßt eine Plakettenöffnung (4) frei, über die das nachzuweisende Gas Zugang zum Indikatorpapier (2) hat. Dort reagiert es mit der auf dem Papier imprägnierten Indikatorlösung zu einem Farbumschlag, dessen Tiefe durch Vergleich mit einem Farbstandard ein Maß für die während der Expositionsdauer gesammelten Menge an nachzuweisendem Gas ist. Als Imprägnierung dient eine Lösung aus Palladiumtetraminchlorid mit einem Sulfolan/Phthalsäurediethylester-Gemisch im Verhältnis 10:1.

## Patentansprüche

1. Prüf- und Meßgerät zum kolorimetrischen Nachweis von gasförmigen Stoffen, welches einen Träger für einen Nachweis-Indikator besitzt, der zusammen mit einem als Feuchtespeicher dienenden Zusatz auf dem Träger imprägniert ist, dadurch gekennzeichnet, daß als Feuchtespeicher ein Gemisch aus Sulfolan und Diethylphthalat vorgesehen ist.

2. Prüf- und Meßgerät nach Anspruch 1, dadurch gekennzeichnet, daß das Mischungsverhältnis Sulfolan zu Diethylphtalat 10:1 beträgt.

3. Prüf- und Meßgeräte nach Anspruch 1 oder 2, dadurch gekennzeichnet, daß zur Messung von Hydridgasen der Indikator ein Palladium-II-Chlorid ist.

4. Prüf- und Meßgerät nach Anspruch 1 oder 2, dadurch gekennzeichnet, daß zur Messung von Hydridgasen der Indikator ein Palladiumtetraminchlorid ist.
